# EUROPEAN PATENT SPECIFICATION

(11) **EP 2 421 291 B1**
(45) Date of publication and mention of the grant of the patent: **19.06.2019**
(21) Application number: 10764115.1
(22) Date of filing: 16.04.2010
(51) Int. Cl.: H04L 12/24, H04W 4/50, H04L 29/08

(54) **TERMINAL FOR DEVICE MANAGEMENT AND METHOD FOR INITIATING MANAGEMENT SESSION THEREOF**
GERÄTEMANAGEMENT-ENDGERÄT UND VERFAHREN ZUR INITIIERUNG EINER MANAGEMENTSITZUNG DAFÜR
TERMINAL POUR LA GESTION DE DISPOSITIFS ET PROCEDE POUR LE LANCEMENT DE SESSION DE GESTION CORRESPONDANT

(30) Priority: 17.04.2009 CN 200910130910
(43) Date of publication of application: 22.02.2012
(73) Proprietor: Huawei Device Co., Ltd., Dongguan, Guangdong 523808 (CN)
(72) Inventor: LIU, Haitao, Shenzhen Guangdong 518129 (CN); SONG, Yue, Shenzhen Guangdong 518129 (CN); CHANG, Xinmiao, Shenzhen Guangdong 518129 (CN)
(74) Representative: Isarpatent
(86) International application number: PCT/CN2010/071844
(87) International publication number: WO 2010/118702

(56) References cited:
- WO-A1-2005/121989
- CN-A- 1 543 251
- CN-A- 1 714 350
- CN-A- 1 957 345
- CN-A- 101 540 996
- US-A1- 2006 190 608
- "OMA Device Management Standardized Objects, Approved Version 1.2 (OMA-TS-DM_StdObj-V1_2-20070209-A)", OPEN MOBILE ALLIANCE OMA, 9 February 2007 (2007-02-09), pages 1-29, XP55013791,
- OMA: "OMA Device Management Tree and Description", INTERNET CITATION, 9 February 2007 (2007-02-09), pages 1-47, XP002624032, Retrieved from the Internet: URL:http://member.openmobilealliance.org/f tp/Public_documents/DM/Permanent_documents /OMA-TS-DM_TND-V1_2-20070209-A.zip [retrieved on 2011-02-17]

## Description

### FIELD OF THE INVENTION

The present invention relates to the field of electronic devices, and in particular, to a terminal for management through a Device Management (DM) server, and a method for initiating a management session by the terminal

### BACKGROUND OF THE INVENTION

A DM system provides a low-cost solution used for a third party to manage and set environment and configuration information in a terminal (for example, a mobile phone terminal, and a function object in the terminal), so as to solve a problem encountered in use of the terminal, and perform operations such as software and firmware installation and upgrading for the terminal in an Over The Air (OTA) mode.

Open Mobile Alliance (OMA) DM includes two stages, and a first stage is referred to as Bootstrap (initialization, or bootstrapping), in which a terminal is enabled to be switched from a null state without parameter configuration to a state in which a management session may be initiated to a DM server, and an important operation in this stage is configuring a DM Account Management Object (MO). In addition, a bootstrapped terminal may be further bootstrapped, so that the terminal may initiate a session to a new DM server. In addition to basic connection information, device and user application setting information may also be configured in a Bootstrap procedure.

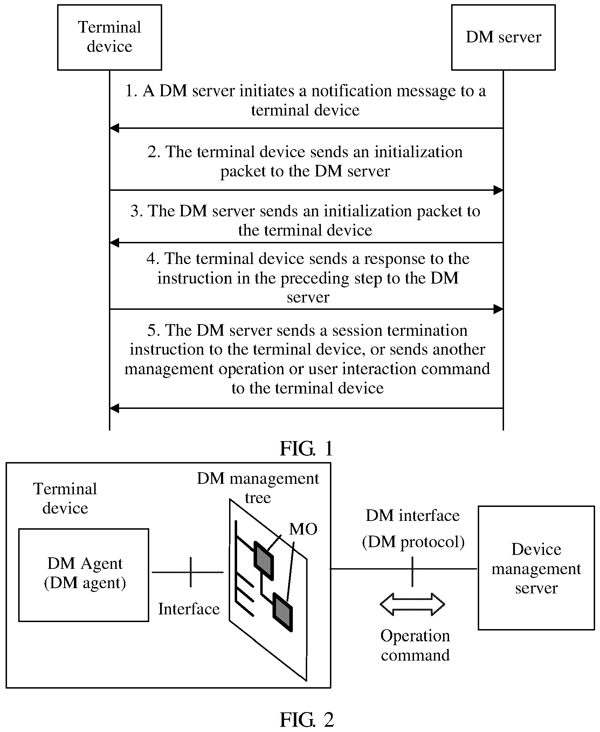

A second stage of DM is a management stage, in which the server may manage the terminal or perform provisioning of information. As shown in FIG 1, specific management includes the following steps:
1. A DM server initiates a notification message to a terminal.
2. The terminal sends an initialization packet to the DM server, in which the initialization packet includes authentication information and terminal information.
3. The DM server sends an initialization packet to the terminal, in which the initialization packet includes authentication information, an initial management operation or a user interaction command.
4. The terminal sends a response to the instruction in the preceding step to the DM server.
5. The DM server sends a session termination instruction to the terminal, or sends another management operation or user interaction command to the terminal.

In practical application, the terminal may actively initiate a management session, so step 1 in FIG. 1 may be omitted, and each time actively initiating a DM session, the terminal obtains a DM server identifier (Server ID) from a DM Account MO.

When the terminal may be managed by multiple DM servers, related information of the multiple DM servers may exist in the DM Account, and the prior art has at least the following problems.
1) The terminal may randomly select a DM server from multiple DM servers to initiate a DM session, in this case, the DM server may not necessarily meet a corresponding management requirement, thereby causing a failure of the management session, and the terminal needs to further initiate a management session to another DM server.
2) The terminal does not know which DM server should be selected, and refuses to actively initiate a management session, so that a session can be triggered only by sending the notification message by the DM server, and undoubtedly, a demand of actively initiating the management session by the terminal cannot be met.

WO 2005/121989 A1 defines a method which allows a device management client to actively request device management from a device management server with respect to an event occurring in a terminal by defining a step in which the device management client determines the device management server from which device management is requested with respect to a specific management object and a step in which the device management server efficiently processes the request of the device management client.

Open Mobile Alliance, "OMA Device Management Standardized Objects" defines a set of management objects. Some of these objects are mandatory for all OMA DM compliant devices and others are optional. The objects are defined using the OMA DM Device Description Framework.

Open Mobile Alliance, "OMA Device Management Tree and Description" defines the management tree and the nodes on which the OMA DM protocol acts. A standardized way to describe these nodes is also specified.

### SUMMARY OF THE INVENTION

Embodiments of the present invention provide a terminal for DM according to independent claim 4, and a method for initiating a management session by the terminal according to independent claim 1, so as to enable the terminal to actively and correctly initiate a management session.

In order to achieve the foregoing objectives, embodiments of the present invention adopt the following technical solutions:
A method for initiating a management session by a terminal includes:
selecting a DM server corresponding to a designated MO according to a preset corresponding relation between the MO and the DM server; and
initiating a management session to the selected DM server,
wherein the corresponding relation between the MO and the DM server is set by one of the following manners:
   when initialization and bootstrapping is performed on the terminal, the terminal receives the corresponding relation, which is set by the DM server, between the MO and the DM server;
   when the MO is created on the terminal, the terminal receives the corresponding relation, which is set by the DM server, between the MO and the DM server;
   after the MO is created on the terminal, the terminal receives the corresponding relation, which is set by the DM server, between the MO and the DM server;
   when the MO is created on the terminal, the terminal sets the corresponding relation between the MO and the DM server; and
   the terminal receives a message, which is initiated by the DM server, of performing a management operation on an MO, and determines whether a corresponding relation between the MO and the DM server exists, if the corresponding relation between the MO and the DM server does not exist, sets the corresponding relation between the MO and the DM server,
   wherein the corresponding relation between the MO and the DM server comprises: a default attribute or a priority of the DM server in the corresponding relation and an identifier of a spare DM server, and the selecting the DM server corresponding to the designated MO according to the preset corresponding relation between the MO and the DM server comprises:
   selecting a DM server that has a default attribute and corresponds to the designated MO according to the preset corresponding relation between the MO and the DM server;
   selecting a DM server that has a high priority and corresponds to the designated MO according to the preset corresponding relation between the MO and the DM server, when the DM server that has the default attribute and corresponds to the designated MO is incapable of providing services; and
      selecting the spare DM server as the DM server corresponding to the designated MO when other DM servers corresponding to the designated MO are incapable of providing services.

A terminal for DM includes:
a selection unit, configured to select a DM server corresponding to a designated MO according to a preset corresponding relation between the MO and the DM server; and
a session unit, configured to initiate a management session to the selected DM server,
wherein the terminal further comprises one of the following units:
   a first receiving unit (231), configured to receive the corresponding relation, which is set by the DM server, between the MO and the DM server when initialization or bootstrapping is performed on the terminal;
   a second receiving unit (234), configured to receive the corresponding relation, which is set by the DM server, between the MO and the DM server when the MO is created on the terminal;
   a third receiving unit (235), configured to receive the corresponding relation,
   which is set by the DM server, between the MO and the DM server after the MO is created on the terminal;
   a first setting unit (236), configured to set the corresponding relation between the MO and the DM server when the MO is created on the terminal; and
   a second setting unit (237), configured to receive a message, which is initiated by the DM server, of performing a management operation on an MO, determine whether a corresponding relation between the MO and the DM server exists, and set the corresponding relation between the MO and the DM server if the corresponding relation between the MO and the DM server does not exist,
wherein the corresponding relation between the MO and the DM server further comprises: a default attribute or a priority of the DM server in the corresponding relation and an identifier of a spare DM server, and
the selection unit (61; 232) is further configured to:
select a DM server that has a default attribute and corresponds to the designated MO according to the preset corresponding relation between the MO and the DM server;
select a DM server that has a high priority corresponding to the designated MO according to the preset corresponding relations between MOs and DM servers, when the DM server that has the default attribute and corresponds to the designated MO is incapable of providing services; and
select the spare DM server as the DM server corresponding to the designated MO when other DM servers corresponding to the designated MO are incapable of providing services.

According to the terminal for DM and the method for initiating a management session by the terminal that are provided by the embodiments of the present invention, as the corresponding relation between the MO and the DM server is preset, and the corresponding DM server needs to be selected according to the corresponding relation before the terminal

initiates the management session to the DM server, the DM server selected in this manner is more pertinent than the DM server randomly selected, so that the DM server can meet the corresponding management requirement, thereby ensuring success of the management session.

Meanwhile, as in the embodiments of the present invention, the DM server may be selected according to the corresponding relation, so that it is ensured that the terminal can accurately select the DM server, and does not refuse to actively initiate the management session, so
embodiments or the prior art are briefly described below. Apparently, the accompanying drawings in the following descriptions merely show some of the embodiments of the present invention, and a person skilled in the art can obtain other drawings according to the accompanying drawings without creative efforts.
FIG. 1 is a method flow chart of a DM execution and management stage;
FIG. 2 is an overall structure diagram of DM;
FIG. 3 is a tree-like structure diagram of a DM Account MO;
FIG. 4 is a tree-like structure diagram of a DevInfo MO;
FIG. 5 is a flow chart of a method for initiating a management session by a terminal according to the present invention;
FIG. 6 is a block diagram of a terminal for DM according to the present invention;
FIG. 7 is a flow chart of a method for initiating a management session by a terminal according to Embodiment 1 of the present invention;
FIG. 8 is a basic tree-like structure diagram of an MO Server MO;
FIG. 9 is a tree-like structure diagram of an MOServer MO adopting a terminal address;
FIG. 10 is a tree-like structure diagram of an MOServer MO with an added priority;
FIG. 11 is a tree-like structure diagram of an MOServer MO with an added default setting;
FIG. 12 is a tree-like structure diagram of an MOServer MO with a spare DM server;
FIG. 13 is a tree-like structure diagram of an MOServer MO adopting a specific MO example;
FIG. 14 is an implementation structure diagram of an MOServer MO in a first specific case;
FIG. 15 is an implementation structure diagram of an MOServer MO in a second specific case;
FIG. 16 is an implementation structure diagram of an MOServer MO in a third specific case;
FIG. 17 is a basic tree-like diagram of a DMAcc MO;
FIG. 18 is a tree-like structure diagram of a DMAcc MO with an added priority;
FIG. 19 is a tree-like structure diagram of a DMAcc MO with an added default setting;
FIG. 20 is a tree-like structure diagram of a DMAcc MO with a spare DM server;
FIG. 21 is a tree-like structure diagram of a DMAcc MO adopting a specific MO example;
FIG. 22 is an implementation structure diagram of a DMAcc MO in a specific case; and
FIG. 23 is a block diagram of a terminal for DM according to Embodiment 3 of the present invention.

### DETAILED DESCRIPTION OF THE EMBODIMENTS

FIG. 2 shows an overall structure of OMA DM. In the overall structure diagram, a DM agent on a terminal is configured to interpret and execute a management command delivered by a DM server. A management tree stored on the terminal may be considered as an interface through which the DM server manages the terminal through a DM protocol. The management tree stored on the terminal includes some basic MOs, and the DM server achieves a purpose of controlling the terminal through an operation on the management tree. Operation commands include Get (get), Replace (replace), Exec (execution), Copy (copy), Delete (delete), and so on.

An MO in the DM management tree is formed by a node, for example, a root node, an interior node, and a leaf node, and the node has its own framework attributes. The framework attributes of a node include, for example, AccessType (access type), DefaultValue (default value), Occurrence (number of occurrences), and DFType (node type), and are used to identify features of the node. In addition, a type of unnamed node exists in the management tree, functions as a placeholder, is named only when being instantiated by the server or the terminal, and is referred to as an x node.

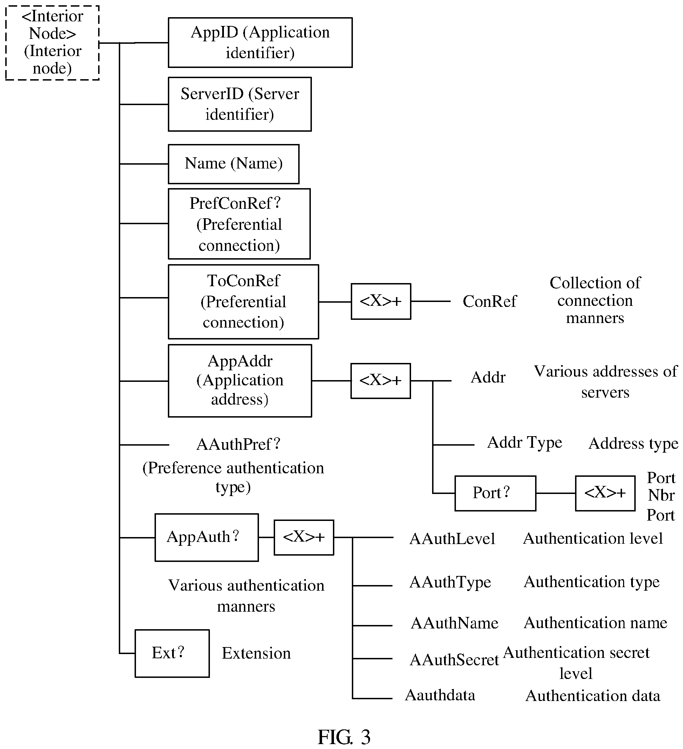

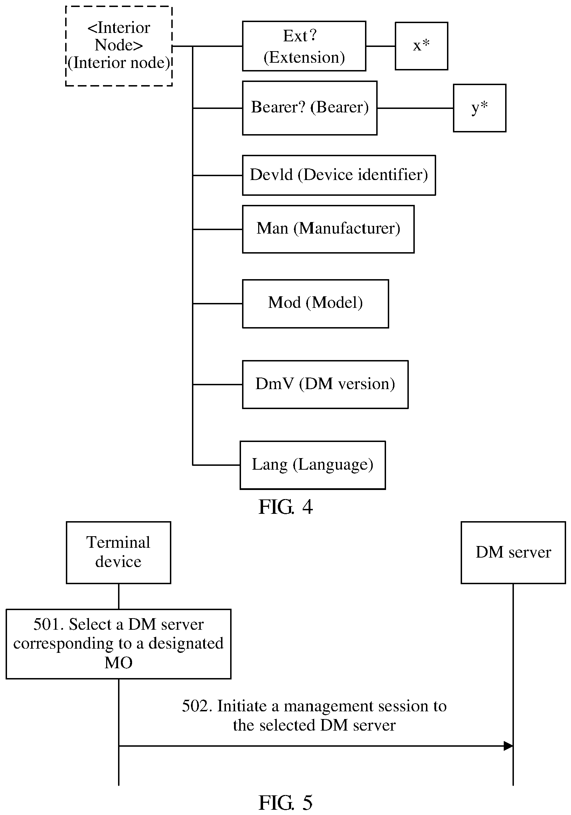

MOs of three standards are given in the OMA DM protocol, and are respectively a DM Account MO, a DevInfo MO, and a DevDetail MO. The DM Account MO is used to manage and store a related parameter for DM, for example, a DM server ID, an address, and an authentication manner; the DevInfo MO is used to manage and store basic information of a terminal, for example, a terminal ID, a manufacturer, a model, and a bearer manner; and the DevDetail MO is an extension of the DevInfo, and gives other information such as a terminal type, a firmware version, and a software/hardware version. Specifically, the DM Account MO is as shown in FIG. 3, and the DevInfo MO is as shown in FIG. 4.

In order to enable the terminal to actively and correctly initiate a management session, an embodiment of the present invention provides a method for initiating a management session by a terminal, and as shown in FIG. 5, the method includes:
501: A terminal selects a DM server corresponding to a designated MO according to a preset corresponding relation between the MO and the DM server, in which the DM server in the corresponding relation can meet a corresponding management requirement of the terminal.
502: The terminal initiates a management session to the selected DM server, so as to complete operations such as management and configuration of the terminal.

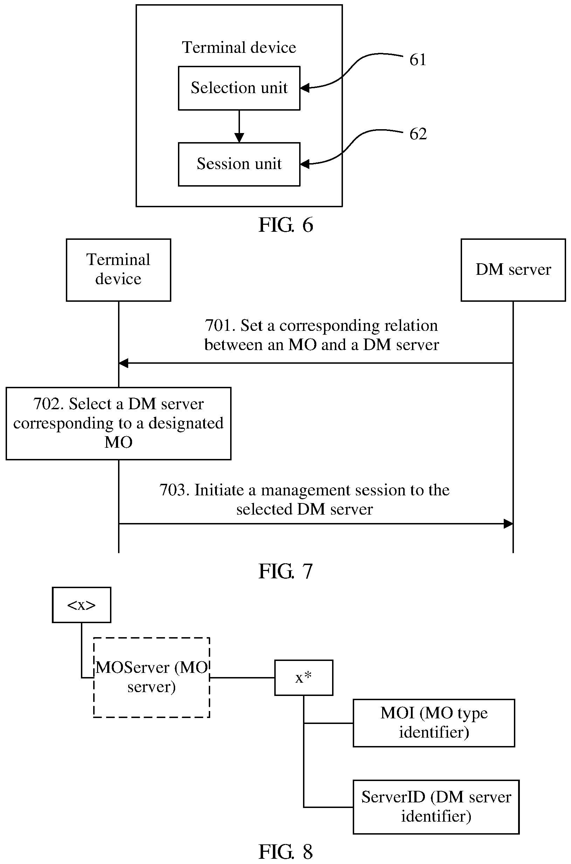

An embodiment of the present invention further provides a terminal for DM, and as shown in FIG. 6, the terminal includes a selection unit 61 and a session unit 62.

The selection unit 61 is configured to select a DM server corresponding to a designated MO according to a preset corresponding relation between the MO and the DM server, so that the selected DM server can meet a corresponding management requirement of the terminal; and the session unit 62 is configured to initiate a management session to the selected DM server.

According to the terminal for DM and the method for initiating a management session by the terminal that are provided by the embodiments of the present invention, as the corresponding relation between the MO and the DM server is preset, and the corresponding DM server needs to be selected according to the corresponding relation before the terminal initiates the management session to the DM server, the DM server selected in this manner is more pertinent than a DM server randomly selected, so that the DM server can meet the corresponding management requirement, thereby ensuring success of the management session.

Meanwhile, as in the embodiments of the present invention, the DM server may be selected according to the corresponding relation, so that it is ensured that the terminal can accurately select the DM server, and does not refuse to actively initiate the management session, so as to meet a demand of actively initiating the management session by the terminal.

The following clearly and fully describes the technical solutions of the present invention with reference to the accompanying drawings. It is obvious that the embodiments to be described are only a part rather than all of the embodiments of the present invention. All other embodiments obtained by a person skilled in the art based on the embodiments of the present invention without creative efforts shall fall within the protection scope of the present invention.

### Embodiment 1

In this embodiment, DM server IDs are centrally set in a new MO, that is, the DM server IDs are placed under an interior node for management. A specific process is as follows:
An MOServer MO is added in a management tree, and used to set corresponding relations between all MO IDs and DM server IDs, as shown in FIG 7, in this case, a method for initiating a management session by a terminal according to an embodiment of the present invention includes:
701: Set a corresponding relation between an MO and a DM server in a terminal, in which specific implementation manners include, but are not limited to, the following five types:
   I. When initialization or bootstrapping is performed on the terminal, the DM server set the corresponding relation between the MO and the DM server, and the terminal receives the corresponding relation, which is set by the DM server, between the MO and the DM server.
   II. When the MO is created on the terminal, the DM server set the corresponding relation between the MO and the DM server, and the terminal receives the corresponding relation, which is set by the DM server, between the MO and the DM server.
   III. After the MO is created, the DM server set the corresponding relation between the MO and the DM server, and the terminal receives the corresponding relation, which is set by the DM server, between the MO and the DM server.
   IV. When the MO is created on the terminal, the terminal sets the corresponding relation between the MO and the DM server.
   V. The terminal receives a message, which is initiated by a DM server, of performing a management operation on an MO, and the terminal judges whether a corresponding relation between the MO and the DM server exists, if the corresponding relation between the MO and the DM server does not exist, the corresponding relation between the MO and the DM server is set.
702: The terminal selects a DM server corresponding to a designated MO according to a preset corresponding relation between the MO and the DM server, in which the DM server in the corresponding relation can meet a corresponding management requirement of the terminal.
703: The terminal initiates a management session to the selected DM server, so as to complete operations such as management and configuration of the terminal.

FIG. 8 shows a tree-like structure of an MOServer MO. Each node in FIG 8 is specifically described below.

An <X>/MOServer node is a parent node of the corresponding relations between all MOs and DM server IDs, and attributes of this node are represented as follows:

| **Status** | **Tree Occurrence** | **Format** | **Min. Access** |
|---|---|---|---|
| REQUIRED | One | Node | Get |

An <X>/MOServer/<X> node is a placeholder of an MO and a DM server that can manage the MO, and attributes of this node are represented as follows:

| **Status** | **Tree Occurrence** | **Format** | **Min. Access** |
|---|---|---|---|
| REQUIRED | ZeroOrMore | Node | Get |

An <X>/MOServer/<X>/MOI is a leaf node, and represents an ID of an MO (MOI), and attributes of this node are represented as follows:

| **Status** | **Tree Occurrence** | **Format** | **Min. Access** |
|---|---|---|---|
| REQUIRED | One | Chr | Get |

An <X>/MOServer/<X>/ServerID is a leaf node, which designates a DM server ID that is used to uniquely represent a server, and attributes of this node are represented as follows:

| **Status** | **Tree Occurrence** | **Format** | **Min. Access** |
|---|---|---|---|
| REQUIRED | One | Chr | Get |

In specific implementation, multiple types of MOs may be corresponding to the same DM server, that is to say, multiple types of MOs are managed by the same DM server; in this case, multiple <X>/MOServer/<X>/MOI nodes may be set in parallel in FIG. 8, so as to represent IDs of multiple types of MOs; in this way, the corresponding relations between multiple types of MOs and the same DM server are represented. The representation method of multiple types of MOs corresponding to the same DM server may also be used in subsequent embodiments.

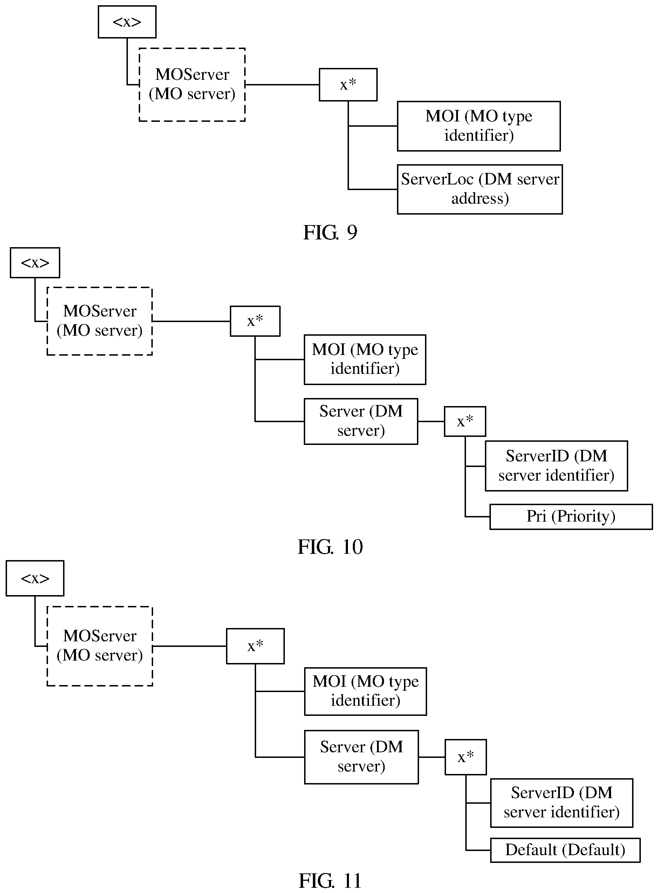

An <X>/MOServer/<X>/ServerID node may be modified to <X>/MOServer/<X>/ServerLoc, and <X>/MOServer/<X>/ServerLoc is a leaf node, which designates an address of a DMAcc MO corresponding to the DM server on the terminal management tree. FIG. 9 shows a tree-like structure of a modified MOServer MO, and the manner of adopting the address on the terminal management tree to represent the DM server may also be used in subsequent embodiments.

If multiple DM servers related to an MO exist, in order to accurately find a DM server, a priority may be set for each DM server, a specific setting manner is adding a priority data item in the tree-like structure of an MOServer MO, and a specific tree-like structure is as shown in FIG. 10, in which functions and attributes of an <X>/MOServer node, an <X>/MOServer/<X> node, and an <X>/MOServer/<X>/MOI node are the same as those in FIG. 8. <X>/MOServer/<X>/Server is a leaf node, and is a parent node of all DM servers related to the MO, and the attributes of this node are represented as follows:

| **Status** | **Tree Occurrence** | **Format** | **Min. Access** |
|---|---|---|---|
| REQUIRED | One | Node | Get |

An <X>/MOServer/<X>/Server/<X> node is a placeholder of the DM server that can manage the MO, and attributes of this node are represented as follows:

| **Status** | **Tree Occurrence** | **Format** | **Min. Access** |
|---|---|---|---|
| REQUIRED | OneOrMore | Node | Get |

An <X>/MOServer/<X>/Server/<X>ServerID is a leaf node, which designates an ID of a DM server used to uniquely represent a server, and attributes of this node are represented as follows:

| **Status** | **Tree Occurrence** | **Format** | **Min. Access** |
|---|---|---|---|
| REQUIRED | One | Chr | Get |

<X>/MOServer/<X>/Server/<X>Pri is a leaf node, which designates the priority of the DM server, and attributes of this node are represented as follows:

| **Status** | **Tree Occurrence** | **Format** | **Min. Access** |
|---|---|---|---|
| REQUIRED | One | Int | Get |

When multiple DM servers exist, a DM server may be designated as a default DM server, or a DM server may be designated as a spare DM server.

A manner for designating a DM server as a default DM server is as shown in FIG. 11. Each time a DM server is selected, the default DM server is selected preferentially, and another DM server may be selected according to a priority sequence in a case that the default DM server cannot be used. In FIG. 11, the functions and attributes of an <X>/MOServer node, an <X>/MOServer/<X> node, an <X>/MOServer/<X>/MOI node, an <X>/MOServer/<X>/Server, an <X>/MOServer/<X>/Server/<X> node, and an <X>/MOServer/<X>/Server/<X>ServerID node are the same as those in FIG. 10, with an exception that an <X>/MOServer/<X>/Server/<X>/Default node is a leaf node, which designates whether the DM server is a default management server, and attributes of this node are represented as follows:

| **Status** | **Tree Occurrence** | **Format** | **Min. Access** |
|---|---|---|---|
| REQUIRED | One | Bool | Get |

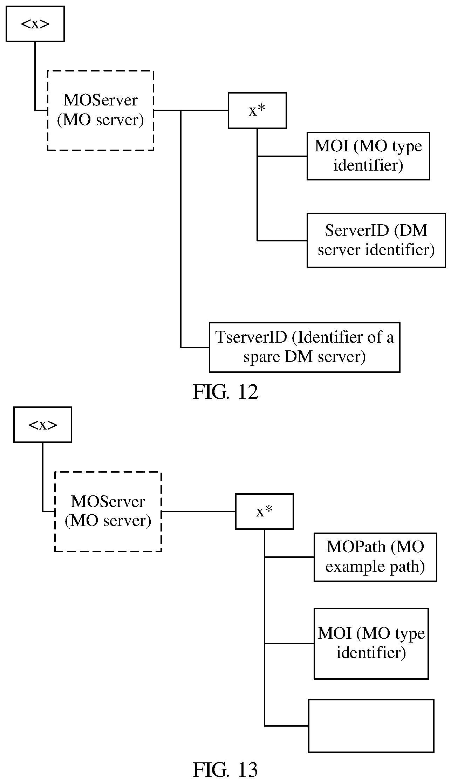

A manner for designating a DM server as a spare DM server is as shown in FIG. 12. When all other DM servers cannot be used, the spare DM server may be selected to initiate a management session. In FIG. 12, the functions and attributes of each node are the same as those in FIG. 10, except for an <X>/MOServer/TServerID node, and specifically, <X>/MOServer/TServerID is a leaf node, which designates an ID of an DM server used to uniquely represent the spare DM server of all MOs.

In addition, the ServerID in FIG. 10, 11 and 12 may also be changed to the address of the DMAcc MO corresponding to the DM server on a client DM tree. For a specific manner, refer to the implementation manner in FIG. 9.

FIG. 8 to 12 show the corresponding relation between a type of MOs and a DM server. In practical application, a corresponding relation between a specific example in the type of MOs and the DM server may be needed, so that corresponding management and operations can be performed on different examples in the type of MOs. This embodiment of the present invention further provides a setting of the corresponding relation between a specific MO example and the DM server, and specifically, a management tree used in the setting is as shown in FIG. 13, in which functions and attributes of each node are the same as those in FIG. 10. In addition, the <X>/MOServer/<X>/MOI node is an optional node, a newly added <X>/MOServer/<X>/MOPath node is a leaf node, which gives a path of a root rode of an MO example on the DM tree, the ID of the MO example may be represented through the path, and attributes of this node are represented as follows:

| **Status** | **Tree Occurrence** | **Format** | **Min. Access** |
|---|---|---|---|
| REQUIRED | One | Chr | Get |

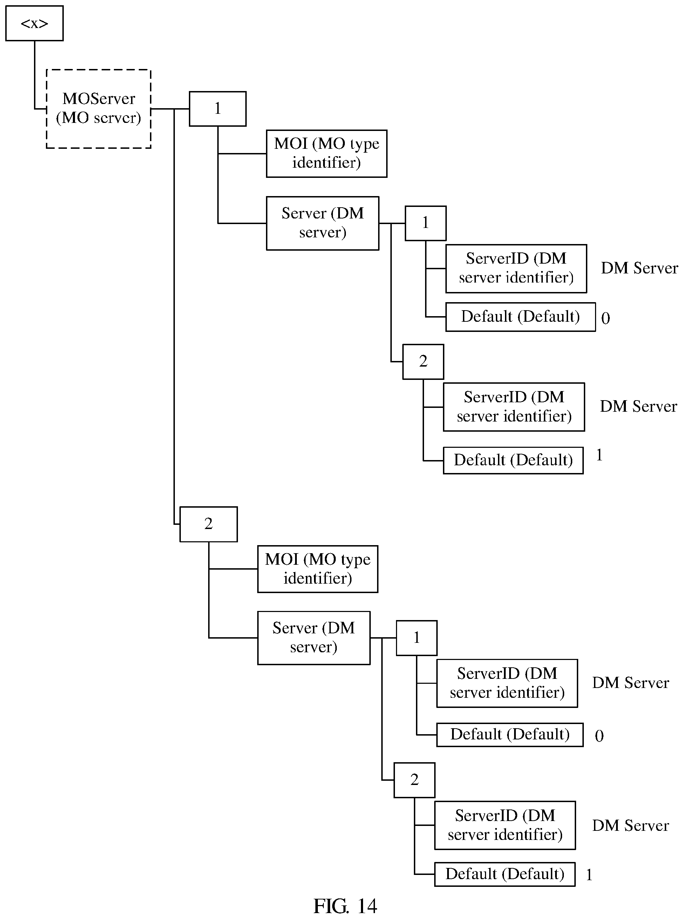

MOServer MOs corresponding to several different cases are enumerated below:
In a first case, there is a terminal (IMEI = 493005100592800); two types of MOs: SCOMO and FUMO exist on a DM tree; in previous management of the device, only a DMServer1 is used as a DM server, later, a DMServer2 is added as a DM server with respect to an SCOMO MO, and a DMServer3 is added as a DM server with respect to an FUMO MO. Therefore, the DMServer1 adds an MOServer MO on the terminal, and designates the DMServer2 server as a default DM server of the SCOMO MO, and the DMServer3 as a default DM server of the FUMO MO, and the MOServer MO is specifically shown in FIG 14.

In this case, if the terminal actively initiates a management session with respect to the SCOMO MO, the terminal inquires the MOServer MO first, and finds that for the SCOMO MO, the corresponding default DM server is the DMServer2, so the terminal sets the server ID as the DMServer2 in a PKG1. Likewise, if the terminal actively initiates a management session with respect to the FUMO MO, the DM server that needs to be connected is the DMServer3.

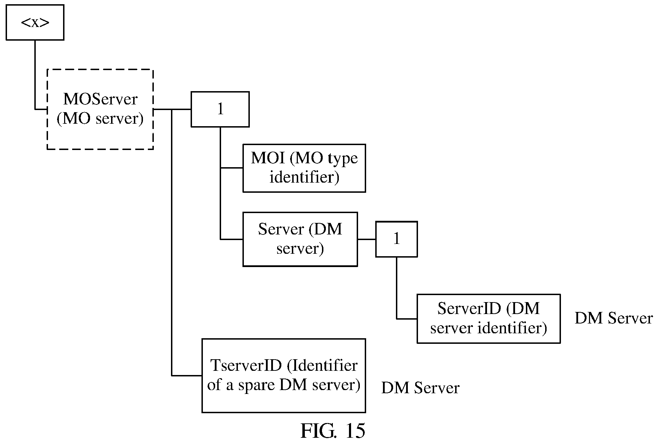

In a second case, the DMServer1 may be set as a spare DM server for various MOs on the management tree based on the first case, the DMServer2 is stilled used as a DM server for the. SCOMO MO, and no other DM server is used for the FUMO MO. In this case, the MOServer MO is specifically shown in FIG 15. If the terminal actively initiates a management session with respect to the SCOMO MO, the terminal inquires the MOServer MO first, and finds that the corresponding default DM server is the DMServer2 for the SCOMO MO, so the terminal sets the server ID as the DMServer2 in the PKG1. However, if the terminal initiates a management session with respect to the FUMO MO, as no DM server is designated for FUMO on the MOServer MO, the spare server DMServer1 needs to be connected in this case.

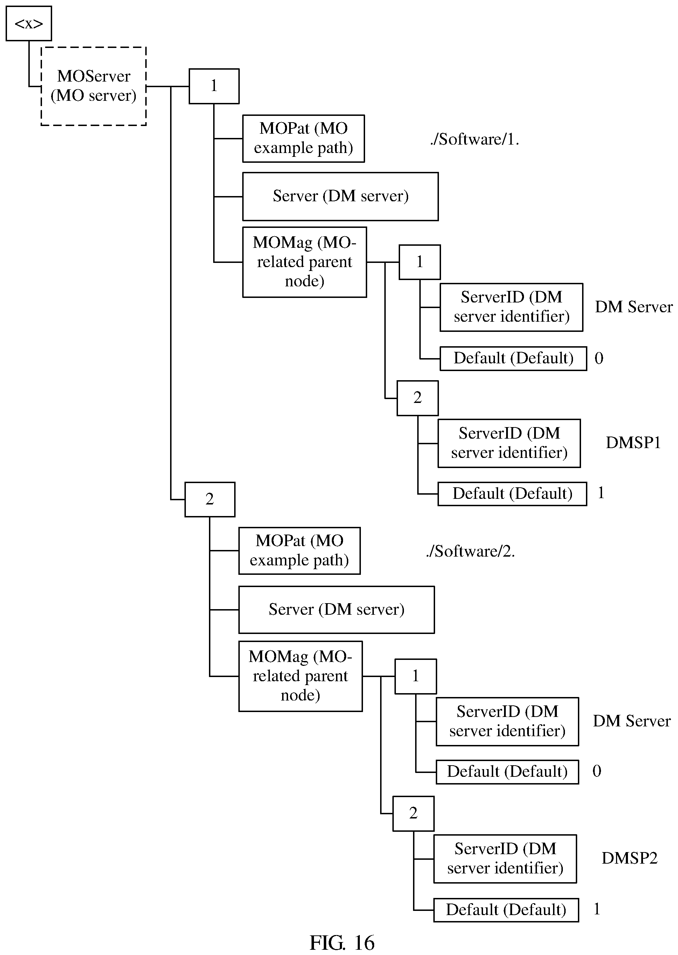

In a third case, there is a terminal (IMEI = 493005100592800), two SCOMO MO examples exist on the DM tree, the paths of the two SCOMO MO examples are respectively ./Software/1 and ./Software/2, the DM servers corresponding to the paths are respectively DMSP1 and DMSP2, and the two DM servers are both default DM servers; meanwhile, a DMServer is also used as a DM server of the two object examples, and the MOServer MO is specifically shown in FIG 16. When the terminal actively initiates management sessions with respect to different SCOMO examples, different DM servers are selected to initiate the management sessions.

### Embodiment 2

In this embodiment, a sub-node is added to each DMAcc MO, and an ID of a DM server is set in the sub-node added to a DMAcc MO, and is used to identify related information of an MO which can be managed by the DM server. Specifically, a method for initiating a management session is almost the same as that represented in FIG. 7, except that a setting position of the corresponding relation is different.

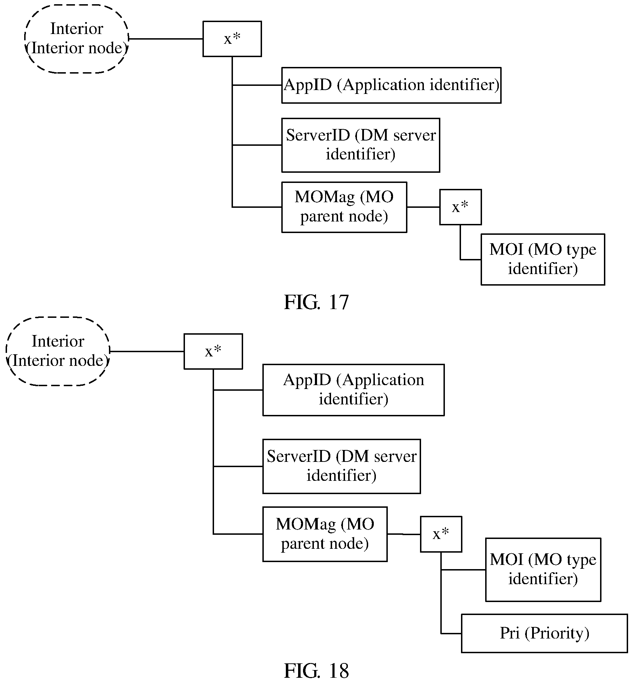

FIG 17 shows a tree-like structure of a DMAcc MO, and each node in FIG. 17 is specifically described below. <X>/MOMag is a leaf node, and represents a parent node of an MO related to the DM server, and specific attributes of this node are as follows:

| **Status** | **Tree Occurrence** | **Format** | **Min. Access** |
|---|---|---|---|
| REQUIRED | One | Node | Get |

<X>/MOMag/<X> is a leaf node, and represents a placeholder of an MO that can be managed by the DM server, and specific attributes of the node are as follows:

| **Statut** | **Tree Occurence** | **Format** | **Min. Access** |
|---|---|---|---|
| REQUIRED | ZeroOrMore | Node | Get |

<X>/MOMag/<X>/MOI is a leaf node, and gives an MO ID (MOI), and specific attributes of the node are as follows:

| **Status** | **Tree Occurrence** | **Format** | **Min. Access** |
|---|---|---|---|
| REQUIRED | One | Chr | Get |

If multiple DM servers related to an MO exist, in order to accurately find a DM server, a priority may be set for each DM server, a specific setting manner is adding a priority data item in the tree-like structure, and a specific tree-like structure is as shown in FIG. 18, in which a newly added node <X>/MOMag/<X>/Pri is a leaf node, and designates a priority of an MO corresponding to the MOI node managed by a DM server that corresponds to the DMAcc MO, and specific attributes of this node are as follows:

| **Status** | **Tree Occurrence** | **Format** | **Min. Access** |
|---|---|---|---|
| REQUIRED | One | Int | Get |

When multiple DM servers exist, a DM server may be designated as a default DM server, or a DM server may be designated as a spare DM server.

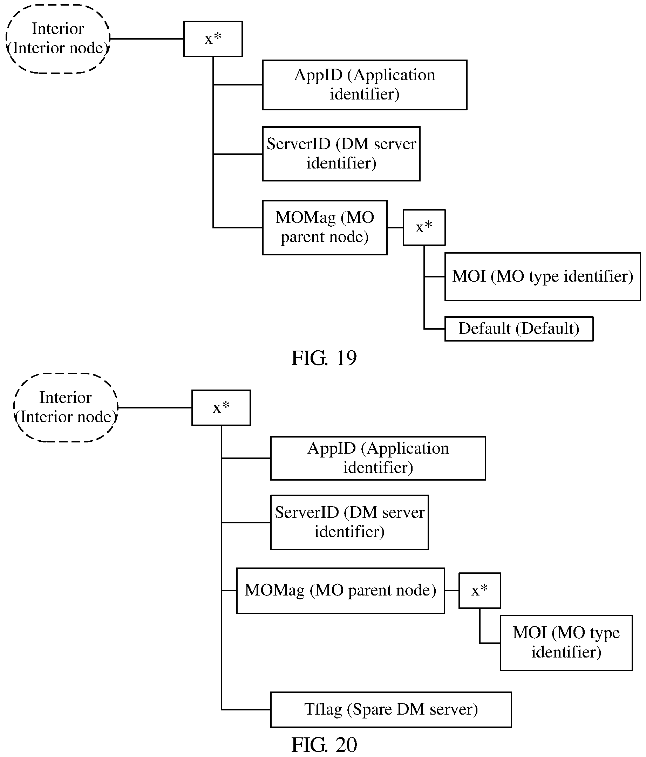

A manner for designating a DM server as a default DM server is as shown in FIG. 19. Each time a DM server is selected, the default DM server is selected preferentially, and another DM server may be selected according to a priority sequence in a case that the default DM server cannot be used. In FIG. 19, an <X>/MOMag/<X>/Default node is a leaf node, and indicates whether the DM server corresponding to the DMAcc MO is a default server that manages the MO corresponding to the MOI node, and specific attributes of this node are as follows:

| **Status** | **Tree Occurrence** | **Format** | **Min. Access** |
|---|---|---|---|
| REQUIRED | One | Bool | Get |

When a DM server is designated as a spare DM server, if all other DM servers cannot be used, the spare DM server may be selected to initiate the management session, and specific implementation may be achieved by adding a node, as shown in FIG. 20, <X>/TFlag is a leaf node, and designates whether the DM server is a spare management server, and specific attributes of this node are as follows:

| **Status** | **Tree Occurrence** | **Format** | **Min. Access** |
|---|---|---|---|
| REQUIRED | One | Bool | Get |

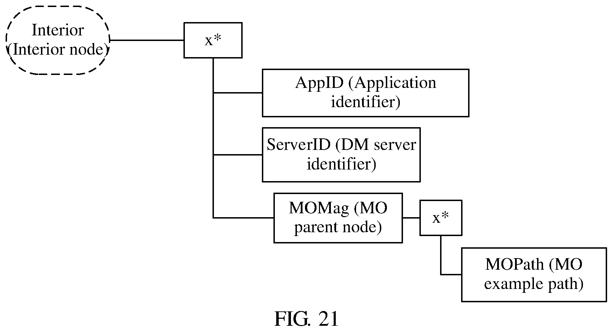

FIG. 17 to 20 show the corresponding relation between a type of MOs and a DM server. In practical application, a corresponding relation between a specific example in the type of MOs and the DM server may be needed, so that corresponding management and operations can be performed on different examples in the type of MOs. This embodiment of the present invention further provides a setting of the corresponding relation between a specific MO example and the DM server, and specifically, a management tree used in the setting is as shown in FIG. 21, in which functions and attributes of each node are the same as those in FIG. 17, except that the node MOI needs to be changed to a node <X>/MOMag/<X>/MOPath, which is a leaf node, and gives a path of a root rode of an MO example on the DM tree, the ID of the MO example may be represented through the path, and attributes of this node are represented as follows:

| **Status** | **Tree Occurrence** | **Format** | **Min. Access** |
|---|---|---|---|
| REQUIRED | One | Chr | Get |

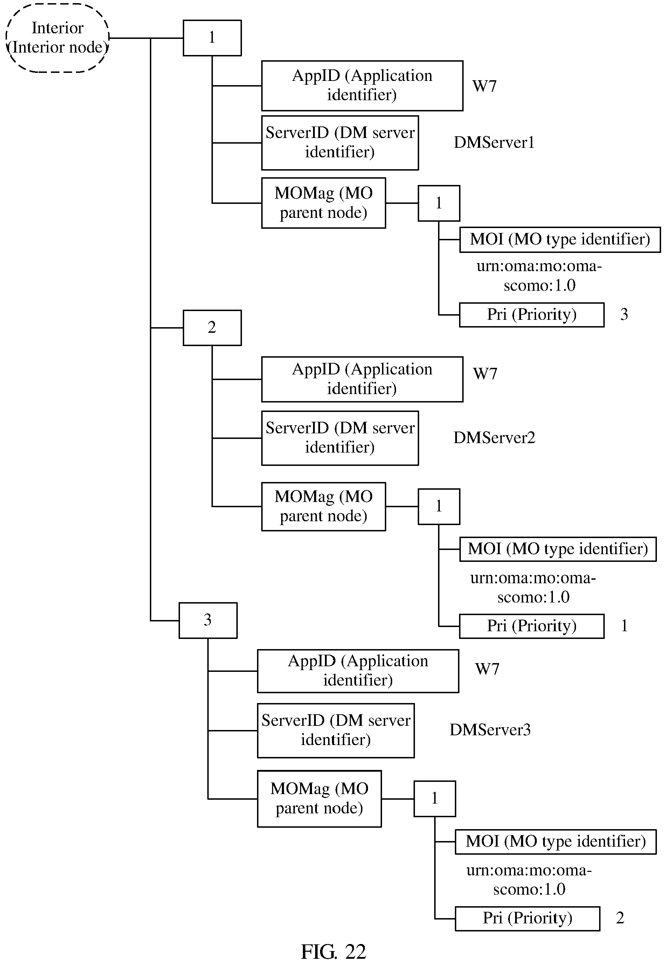

Specific implementation of this embodiment is described through an example below. There is a terminal (IMEI = 493005100592800), an existing server DMServer1 intends to create an SCOMO MO on the DM tree, and designates DM servers that can manage the MO at the same time of creating the SCOMO MO: DMServer1, DMServer2, and DMServer3, in which the DMServer2 has the highest priority, the DMServer3 has a higher priority, and the DMServer1 has the lowest priority. A DMAcc MO is specifically shown in FIG. 22. When the terminal actively initiates a management session with respect to the SCOMO MO, the DMServer2 will be preferentially selected as the DM server, and then the DMServer3 and the DMServer1 are selected in sequence if the DMServer2 cannot be preferentially selected as the DM server.

### Embodiment 3

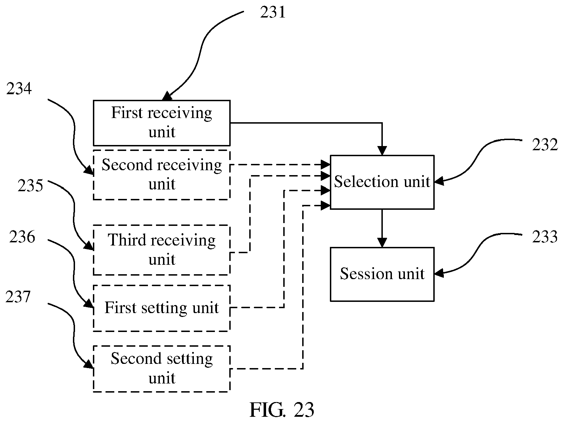

This embodiment provides a terminal for DM. As shown in FIG. 23, the terminal includes a first receiving unit 231, a selection unit 232, and a session unit 233.

The first receiving unit 231 is configured to receive, when initialization or bootstrapping is performed, a corresponding relation, which is set by the DM server, between an MO and a DM server; the selection unit 232 is configured to select a DM server corresponding to a designated MO according to the preset corresponding relation between the MO and the DM server, so that the selected DM server can meet a corresponding management requirement of the terminal; and the session unit 233 is configured to initiate a management session to the selected DM server.

As shown by a dash line in FIG 23, the first receiving unit 231 may be implemented by using, but being not limited to, the following 4 alternative manners, or any combination of the first receiving unit 231 with a second receiving unit 234, a third receiving unit 235, a first setting unit 236, and a second setting unit 237.
I. The first receiving unit 231 is replaced by the second receiving unit 234, and the second receiving unit 234 is configured to receive, when the MO is created, the corresponding relation, which is set by the DM server, between the MO and the DM server.
II. The first receiving unit 231 is replaced by the third receiving unit 235, and the third receiving unit 235 is configured to receive, after the MO is created, the corresponding relation, which is set by the DM server, between the MO and the DM server.
III. The first receiving unit 231 is replaced by the first setting unit 236, and the first setting unit 236 is configured to set the corresponding relation between the MO and the DM server after the MO is created.
IV. The first receiving unit 231 is replaced by the second setting unit 237, and the second setting unit 237 is configured to receive a message, which is initiated by a DM server, of performing a management operation on an MO, determine whether a corresponding relation between the MO and the DM server exists, and set the corresponding relation between the MO and the DM server if the corresponding relation between the MO and the DM server does not exist.

Corresponding relations between all MOs and DM servers in this embodiment may all adopt the implementation manner in Embodiment 1, or adopt the implementation manner in Embodiment 2.

If the corresponding relation between the MO and the DM server further includes a default attribute of the DM server, the selection unit 232 selects a DM server that has the default attribute and corresponds to the designated MO according to the preset corresponding relation between the MO and the DM server.
If the corresponding relation between the MO and the DM server further includes a priority of the DM server, the selection unit 232 selects a DM server corresponding to the designated MO according to a priority sequence of preset corresponding relations between MOs and DM servers.
If the corresponding relation between the MO and the DM server further include an ID of a spare DM server, the selection unit 232 selects the spare DM server as the DM server corresponding to the designated MO when other DM servers corresponding to the designated MO are incapable of providing services.
According to the terminal for DM provided by this embodiment of the present invention, as the corresponding relation between the MO and the DM server is preset, and the corresponding DM server needs to be selected according to the corresponding relation before the terminal initiates the management session to the DM server, the DM server selected in this manner is more pertinent than a DM server randomly selected, so that the DM server can meet the corresponding management requirement, thereby ensuring success of the management session. Meanwhile, as in this embodiment of the present invention, the DM server may be selected according to the corresponding relation, so that it is ensured that the terminal can accurately select the DM server, and does not refuse to actively initiate the management session, so as to meet a demand of actively initiating the management session by the terminal.
Embodiments of the present invention are mainly applied in various terminals, such as a mobile phone, and a computer.
Through the foregoing description of the embodiments, it is apparent to a person skilled in the art that the present invention may be implemented by software with necessary universal hardware, and definitely may also be implemented by hardware, but in most cases, the former is a better implementation method. Based on this, the technical solutions of the present invention or the part that makes contributions to the prior art can be substantially embodied in a form of a software product. The computer software product may be stored in a readable storage medium, for example, a floppy disk, a hard disk, or a Compact Disk-Read Only Memory (CD-ROM) of a computer, and contain several instructions used to instruct a computer device (for example, a personal computer, a server, or a network device) to perform the methods according to the embodiments of the present invention.
The preceding is only the specific implementation of the present invention, but the protection scope of the present invention is not limited thereto. Therefore, the protection scope of the present invention shall be the protection scope of the claims.

## Claims

1. A method for initiating a management session by a terminal, comprising:
selecting (501, 702) a Device Management, DM, server corresponding to a designated Management Object, MO, according to a preset corresponding relation between the MO and the DM server; and
initiating (502, 703) a management session to the selected DM server,
wherein the corresponding relation between the MO and the DM server is set by one of the following manners:
when initialization and bootstrapping is performed on the terminal, the terminal receives the corresponding relation, which is set by the DM server, between the MO and the DM server;
when the MO is created on the terminal, the terminal receives the corresponding relation, which is set by the DM server, between the MO and the DM server;
after the MO is created on the terminal, the terminal receives the corresponding relation, which is set by the DM server, between the MO and the DM server;
when the MO is created on the terminal, the terminal sets the corresponding relation between the MO and the DM server; and
the terminal receives a message, which is initiated by the DM server, of performing a management operation on an MO, and determines whether a corresponding relation between the MO and the DM server exists, if the corresponding relation between the MO and the DM server does not exist, sets the corresponding relation between the MO and the DM server,
wherein the corresponding relation between the MO and the DM server comprises: a default attribute or a priority of the DM server in the corresponding relation and an identifier of a spare DM server, and the selecting the DM server corresponding to the designated MO according to the preset corresponding relation between the MO and the DM server comprises:
selecting a DM server that has a default attribute and corresponds to the designated MO according to the preset corresponding relation between the MO and the DM server;
selecting a DM server that has a high priority and corresponds to the designated MO according to the preset corresponding relation between the MO and the DM server, when the DM server that has the default attribute and corresponds to the designated MO is incapable of providing services; and
selecting the spare DM server as the DM server corresponding to the designated MO, when other DM servers corresponding to the designated MO are incapable of providing services.

2. The method for initiating a management session by a terminal according to claim 1, wherein the corresponding relation between the MO and the DM server is set in a DM Account MO; or the corresponding relation between the MO and the DM server is set in an MO other than the DM Account MO.

3. The method for initiating a management session by a terminal according to claim 1, wherein the corresponding relation between the MO and the DM server further comprises: an identifier of the MO and an identifier of the corresponding DM server, or an identifier of a specific example of the MO and an identifier of the corresponding DM server.

4. A terminal for Device Management, DM, comprising:
a selection unit (61; 232), configured to select a DM server corresponding to a designated Management Object, MO, according to a preset corresponding relation between the MO and the DM server; and
a session unit (62; 233), configured to initiate a management session to the selected DM server,
wherein the terminal further comprises one of the following units:
a first receiving unit (231), configured to receive the corresponding relation, which is set by the DM server, between the MO and the DM server when initialization or bootstrapping is performed on the terminal;
a second receiving unit (234), configured to receive the corresponding relation, which is set by the DM server, between the MO and the DM server when the MO is created on the terminal;
a third receiving unit (235), configured to receive the corresponding relation, which is set by the DM server, between the MO and the DM server after the MO is created on the terminal;
a first setting unit (236), configured to set the corresponding relation between the MO and the DM server when the MO is created on the terminal; and
a second setting unit (237), configured to receive a message, which is initiated by the DM server, of performing a management operation on an MO, determine whether a corresponding relation between the MO and the DM server exists, and set the corresponding relation between the MO and the DM server if the corresponding relation between the MO and the DM server does not exist,
wherein the corresponding relation between the MO and the DM server further comprises: a default attribute or a priority of the DM server in the corresponding relation and an identifier of a spare DM server, and
the selection unit (61; 232) is further configured to:
select a DM server that has a default attribute and corresponds to the designated MO according to the preset corresponding relation between the MO and the DM server;
select a DM server that has a high priority corresponding to the designated MO according to the preset corresponding relations between MOs and DM servers, when the DM server that has the default attribute and corresponds to the designated MO is incapable of providing services; and
select the spare DM server as the DM server corresponding to the designated MO, when other DM servers corresponding to the designated MO are incapable of providing services.

## Patentansprüche

1. Verfahren zum Initiieren einer Managementsitzung durch ein Endgerät, umfassend:
Auswählen (501, 702) eines Gerätemanagements (Device Management; DM), Servers entsprechend eines designierten Managementobjekts, MO, gemäß einer voreingestellten, korrespondierenden Beziehungen zwischen dem MO und dem DM-Server; und
Initiieren (502, 703) einer Managementsitzung zu dem ausgewählten DM-Server, wobei die korrespondierende Beziehung zwischen dem MO und dem DM-Server auf eine der folgenden Weisen eingestellt wird:
wenn Initialisierung und Bootstrapping auf dem Endgerät durchgeführt wird, empfängt das Endgerät die entsprechende Beziehung, die von dem DM-Server eingestellt wird, zwischen dem MO und dem DM-Server;
wenn das MO auf dem Endgerät erzeugt wird, empfängt das Endgerät die korrespondierende Beziehung, die von dem DM-Server eingestellt wird, zwischen dem MO und dem DM-Server;
nachdem das MO auf dem Endgerät erzeugt wurde, empfängt das Endgerät die korrespondierende Beziehung, die von dem DM-Server eingestellt wird, zwischen dem MO und dem DM-Server;
wenn das MO auf dem Endgerät erzeugt wird, stellt das Endgerät die korrespondierende Beziehung zwischen dem MO und dem DM-Server ein; und
das Endgerät empfängt eine Nachricht, die von dem DM-Server initiiert wird, des Durchführens eines Managementvorgangs an einem MO, und es bestimmt, ob eine korrespondierende Beziehung zwischen dem MO und dem DM-Server existiert, wenn die korrespondierende Beziehung zwischen dem MO und dem DM-Server nicht existiert, stellt es die korrespondierende Beziehung zwischen dem MO und dem DM-Server ein,
wobei die korrespondierende Beziehung zwischen dem MO und dem DM-Server umfasst: ein Standardattribut oder eine Priorität des DM-Servers in der korrespondierenden Beziehung und eine Kennung eines Ersatz-DM-Servers, und das Auswählen des DM-Servers entsprechend dem designierten MO gemäß der voreingestellten korrespondierenden Beziehung zwischen dem MO und dem DM-Server umfasst: Auswählen eines DM-Servers, der ein Standardattribut aufweist, und dem designierten MO gemäß der voreingestellten korrespondierenden Beziehung zwischen dem MO und dem DM-Server entspricht;
Auswählen eines DM-Servers, der eine hohe Priorität aufweist und dem designierten MO gemäß der voreingestellten korrespondierenden Beziehung zwischen dem MO und dem DM-Server entspricht, wenn der DM-Server, der das Standardattribut aufweist und dem designierten MO entspricht, nicht dazu in der Lage ist, Dienste bereitzustellen; und
Auswählen des Ersatz-DM-Servers als den DM-Server entsprechend des designierten MO, wenn andere DM-Server, die dem designierten MO entsprechen, nicht dazu in der Lage sind, Dienste bereitzustellen.

2. Verfahren zum Initiieren einer Managementsitzung durch ein Endgerät gemäß Anspruch 1, wobei die korrespondierende Beziehung zwischen dem MO und dem DM-Server in einem DM-Konto-MO eingestellt wird; oder die korrespondierende Beziehung zwischen dem MO und dem DM-Server wird in einem anderen MO eingestellt als dem DM-Konto-MO.

3. Verfahren zum Initiieren einer Managementsitzung durch ein Endgerät nach Anspruch 1, wobei die korrespondierende Beziehung zwischen dem MO und dem DM-Server ferner umfasst: eine Kennung des MO und eine Kennung des entsprechenden DM-Servers oder eine Kennung eines spezifischen Beispiels des MO und eine Kennung des entsprechenden DM-Servers.

4. Endgerät für Gerätemanagement (Device Management; DM), umfassend:
eine Auswahleinheit (61; 232), die konfiguriert ist, einen DM-Server entsprechend einem designierten Managementobjekt, MO, gemäß einer voreingestellten, korrespondierenden Beziehung zwischen dem MO und dem DM-Server auszuwählen; und
eine Sitzungseinheit (62; 233), die konfiguriert ist, eine Managementsitzung zu dem ausgewählten DM-Server zu initiieren,
wobei das Endgerät ferner eine der folgenden Einheiten umfasst: eine erste Empfangseinheit (231), die konfiguriert ist, die korrespondierende Beziehung, die von dem DM-Server eingestellt wird, zwischen dem MO und dem DM-Server zu empfangen, wenn an dem Endgerät Initialisierung oder Bootstrapping durchgeführt wird;
eine zweite Empfangseinheit (234), die konfiguriert ist, die korrespondierende Beziehung zu empfangen, die von dem DM-Server festgelegt wird, zwischen dem MO und dem DM-Server, wenn das MO auf dem Endgerät erzeugt wird;
eine dritte Empfangseinheit (235), die konfiguriert ist, die korrespondierende Beziehung, die von dem DM-Server eingestellt wird, zwischen dem MO und dem DM-Server zu empfangen nachdem das MO auf dem Endgerät erzeugt wurde;
eine erste Einstelleinheit (236), die konfiguriert ist, die korrespondierende Beziehung zwischen dem MO und dem DM-Server einzustellen, wenn das MO auf dem Endgerät erzeugt wird; und
eine zweite Einstelleinheit (237), die konfiguriert ist, eine Nachricht, die von dem DM-Server initiiert wird, des Durchführens eines Managementvorgangs an einem MO zu empfangen, zu bestimmen, ob eine korrespondierende Beziehung zwischen dem MO und dem DM-Server existiert, und die korrespondierende Beziehung zwischen dem MO und dem DM-Server einzustellen, wenn die korrespondierende Beziehung zwischen dem MO und dem DM-Server nicht existiert,
wobei die korrespondierende Beziehung zwischen dem MO und dem DM-Server ferner umfasst: ein Standardattribut oder eine Priorität des DM-Servers in der korrespondierenden Beziehung und eine Kennung eines Ersatz-DM-Servers, und
die Auswahleinheit (61; 232) ist ferner konfiguriert:
einen DM-Server auszuwählen, der ein Standardattribut aufweist und dem designierten MO gemäß der voreingestellten korrespondierenden Beziehung zwischen dem MO und dem DM-Server entspricht;
einen DM-Server auszuwählen, der eine hohe Priorität aufweist, die dem designierten MO gemäß der voreingestellten korrespondierenden Beziehung zwischen MOs und DM-Servern entspricht, wenn der DM-Server, der das Standardattribut aufweist und dem designierten MO entspricht, nicht dazu in der Lage ist, Dienste bereitzustellen; und
den Ersatz-DM-Server als den DM-Server entsprechend dem designierten MO auszuwählen, wenn andere DM-Server, die dem designierten MO entsprechen, nicht dazu in der Lage sind, Dienste bereitzustellen.

## Revendications

1. Procédé pour lancer une session de gestion par un terminal, comprenant de :
sélectionner (501, 702) un serveur de gestion de dispositifs, DM, correspondant à un objet de gestion, MO, désigné en fonction d'une relation de correspondance prédéfinie entre le MO et le serveur DM ; et
lancer (502, 703) une session de gestion sur le serveur DM sélectionné,
dans lequel la relation de correspondance entre le MO et le serveur DM est définie de l'une des manières suivantes :
lorsque l'initialisation et l'amorçage sont effectués sur le terminal, le terminal reçoit la relation de correspondance qui est définie par le serveur DM entre le MO et le serveur DM ;
lorsque le MO est créé sur le terminal, le terminal reçoit la relation de correspondance qui est définie par le serveur DM entre le MO et le serveur DM ;
une fois que le MO a été créé sur le terminal, le terminal reçoit la relation de correspondance qui est définie par le serveur DM entre le MO et le serveur DM ;
lorsque le MO est créé sur le terminal, le terminal définit la relation de correspondance entre le MO et le serveur DM ; et
le terminal reçoit un message, qui est initié par le serveur DM, pour effectuer une opération de gestion sur un MO, et détermine si une relation de correspondance existe entre le MO et le serveur DM, si la relation de correspondance entre le MO et le serveur DM n'existe pas, il définit la relation de correspondance entre le MO et le serveur DM,
dans lequel la relation de correspondance entre le MO et le serveur DM comprend : un attribut par défaut ou une priorité du serveur DM dans la relation de correspondance et un identifiant d'un serveur DM de réserve, et la sélection du serveur DM correspondant au MO désigné en fonction de la relation de correspondance prédéfinie entre le MO et le serveur DM comprend de :
sélectionner un serveur DM qui a un attribut par défaut et qui correspond au MO désigné en fonction de la relation de correspondance prédéfinie entre le MO et le serveur DM ;
sélectionner un serveur DM qui a une haute priorité et qui correspond au MO désigné en fonction de la relation de correspondance prédéfinie entre le MO et le serveur DM lorsque le serveur DM qui a l'attribut par défaut et qui correspond au MO désigné est incapable de fournir des services ; et
sélectionner le serveur DM de réserve en tant que serveur DM correspondant au MO désigné lorsque d'autres serveurs DM correspondant au MO désigné sont incapables de fournir des services.

2. Procédé pour lancer une session de gestion par un terminal selon la revendication 1, dans lequel la relation de correspondance entre le MO et le serveur DM est définie dans un MO de compte DM ; ou la relation de correspondance entre le MO et le serveur DM est définie dans un MO autre que le MO de compte DM.

3. Procédé pour lancer une session de gestion par un terminal selon la revendication 1, dans lequel la relation de correspondance entre le MO et le serveur DM comprend en outre : un identifiant du MO et un identifiant du serveur DM correspondant, ou un identifiant d'un exemple spécifique du MO et un identifiant du serveur DM correspondant.

4. Terminal de gestion de dispositifs, DM, comprenant :
une unité de sélection (61 ; 232), configurée pour sélectionner un serveur DM correspondant à un objet de gestion, MO, désigné en fonction d'une relation de correspondance prédéfinie entre le MO et le serveur DM ; et
une unité de session (62 ; 233) configurée pour lancer une session de gestion sur le serveur DM sélectionné,
dans lequel le terminal comprend en outre l'une des unités suivantes :
une première unité de réception (231), configurée pour recevoir la relation de correspondance, qui est définie par le serveur DM, entre le MO et le serveur DM lorsque l'initialisation ou l'amorçage est effectué sur le terminal ;
une seconde unité de réception (234), configurée pour recevoir la relation de correspondance, qui est définie par le serveur DM, entre le MO et le serveur DM lorsque le MO est créé sur le terminal ;
une troisième unité de réception (235), configurée pour recevoir la relation de correspondance qui est définie par le serveur DM entre le MO et le serveur DM une fois que le MO a été créé sur le terminal ;
une première unité de définition (236), configurée pour définir la relation de correspondance entre le MO et le serveur DM lorsque le MO est créé sur le terminal ; et
une seconde unité de définition (237), configurée pour recevoir un message, qui est initié par le serveur DM, pour effectuer une opération de gestion sur un MO, déterminer si une relation de correspondance existe entre le MO et le serveur DM, et définir la relation de correspondance entre le MO et le serveur DM si la relation de correspondance entre le MO et le serveur DM n'existe pas,
dans lequel la relation de correspondance entre le MO et le serveur DM comprend en outre : un attribut par défaut ou une priorité du serveur DM dans la relation de correspondance et un identifiant d'un serveur DM de réserve, et
l'unité de sélection (61 ; 232) est en outre configurée pour :
sélectionner un serveur DM qui a un attribut par défaut et qui correspond au MO désigné en fonction de la relation de correspondance prédéfinie entre le MO et le serveur DM ;
sélectionner un serveur DM qui a une priorité élevée correspondant au MO en fonction des relations de correspondance prédéfinies entre les MO et les serveurs DM lorsque le serveur DM qui a l'attribut par défaut et qui correspond au MO désigné est incapable de fournir des services ; et
sélectionner le serveur DM de réserve en tant que serveur DM correspondant au MO désigné lorsque d'autres serveurs DM correspondant au MO désigné sont incapables de fournir des services.
